Europäisches Patentamt

European Patent Office

Office européen des brevets

(19)

(11) Publication number: 0 393 794

A1

## (12) EUROPEAN PATENT APPLICATION

(21) Application number: 90200980.2

(51) Int. Cl.5: G08B 5/22, G08B 3/10

(22) Date of filing: 19.04.90

(30) Priority: 20.04.89 NL 8900999

(43) Date of publication of application:
24.10.90 Bulletin 90/43

(84) Designated Contracting States:
DE FR GB NL

(71) Applicant: Ericsson Paging Systems B.V.
Nautilusstraat 3
NL-7821 AG Emmen(NL)

(72) Inventor: Gaykema, Bernardus Theodorus
Augustinus
56, Fuik
NL-1141 CK Monnickendam(NL)

(74) Representative: van der Arend, Adrianus G.A.,
Ir. et al
EXTERPATENT B.V. P.O. Box 90649
NL-2509 LP The Hague(NL)

(54) Method for application dependent display of data on a screen of a paging system, and a paging system, suitable for use of the method.

(57) Paging system comprising a central transmitter and a number of portable paging receivers. By suitable command of the transmitter by an input device the transmitter may transmit a transmission signal comprising an address, a message type data and further data. If a paging receiver receives such a transmission signal and the address contained therein is identical to an address allocated and stored in advance in a memory of said receiver the receiver may store the further data therein for further use. The type of the further data is specified by the message type data. The further data of a first type represents a normal message to call a user of the receiver and/or to be displayed by said receiver. The further data of a second type comprise pattern or font data of a number m characters to be stored in a memory of the receiver and to be used for displaying a message. The further data of a third type comprise a number of groups, each group comprising a data determining the length of the remaining of the group which comprises a predetermined instruction message for the user of the receiver which will be stored in the receiver and which will be displayed depending on the status of the receiver.

Fig. 1.

EP 0 393 794 A1

**Method for application dependent display of data on a screen of a paging system, and a paging system suitable for use of the method**

The invention relates to a method for transmitting a message and for displaying a message after receipt, in a personal paging system, said method comprising the compilation of a report, which comprises a report destination code, assigned to a receiver of the system, and an information portion, which consists of a series of data and can represent a message, the transmission, by means of a transmitter, of a transmission signal comprising the report, the separation, in the receiver, of the report from a transmission signal received by the receiver, the separation from the report of component parts thereof, the comparison of a received report destination code with a report destination code previously assigned to the receiver and stored in the receiver, and, if the comparison was successful, the processing in the receiver of the information portion of the received report, the processing, on receipt of a message which is represented by the information portion and the data of which represent character codes, comprising the storage of the received message in a location of a message memory and the display of a stored message, a character display pattern associated with the corresponding character being read, from a location indicated by a corresponding character code, from a character pattern memory, and displayed, during the display of data.

A method of this type is known in practice. Because the character pattern memory has a limited capacity and because expansion of the memory is undesirable in the light of the desired miniaturization of a personal paging receiver and would increase the cost price, the character pattern memory contains only the display patterns of the most common characters. This has the disadvantage that, if the personal paging system is to be used in areas speaking different languages, the users can make use only of the limited character set, or that different receivers with different sets of character display patterns must be used. The use of a single set restricts the market for personal paging systems of this type and consequently increases the cost price of the system. The use of different sets has the disadvantage that many types of paging receivers have to be manufactured and kept in stock, which raises the cost price of the system appreciably, especially if the areas speaking a given language are small. What has been stated with regard to areas speaking different languages can also be stated with regard to different application areas, in which case it can be desirable to display special characters, which can differ for different application areas.

The aim of the invention is to overcome the disadvantages of the known method.

This aim is achieved for the method of the type mentioned in the preamble in that, during the compilation of the report, a code to indicate the type of the information portion is added to the report, the types comprising one type for which the information portion contains character pattern codes, and in that, if the comparison was successful, a received character pattern code corresponding to a received type code is stored in a corresponding location of the character pattern memory. By this means the set of character display patterns in the character pattern memory of the personal paging receiver can be wholly or partially changed at an arbitrary time and a character pattern memory of a restricted capacity can suffice. Because a report with which a new set or subset of character pattern codes is transmitted is intended for, and processed by, only one or more personal paging receivers to which the report destination code of the report has been assigned, different receivers in a personal paging system can have different pattern sets. This can be useful in situations in which users from areas speaking different languages use a receiver from the same personal paging system, or if different types of users make use of the system, for example operators in a factory and office personnel who use different special characters.

During a transmission of a report containing character pattern codes, each character pattern code or group of character pattern codes of a specific character can be accompanied by the character code which indicates the character and which is used for storing the pattern codes of the character in a location corresponding to the code in the character pattern memory. By this means the pattern codes of single specific characters can rapidly be transmitted, in arbitrary sequence, to a receiver and stored therein.

As the extent of the portion of the pattern codes, stored in the receiver, which is to be changed increases, it is more preferable, when changing the pattern codes stored in the receiver, always to transfer the pattern codes of a predetermined constant number of characters, always in the same sequence, with a report of the type with which such codes are transferred. By this means, it is not necessary also to transmit the character codes associated with the various pattern codes.

When manufacturing a personal paging receiver, an initialization set of pattern data is preferably stored, for example in a read-only memory, and when the receiver is taken into use, for example on switching on a power supply thereto, the initialization set is transferred to the random access portion of the character pattern memory, which in fact is used by the receiver for direct reading and display of pattern codes associated with a specific character code and which can be wholly or partially replaced by transmitting a new set of pattern codes.

If the receiver comprises an instruction message memory for storing instruction messages, which can be displayed selectively depending on the status of the receiver, the method can be characterized such that the types comprise one type for which the information portion contains a number of instruction messages and that, if the comparison was successful, the received instruction message corresponding to a received type code is stored in a corresponding location of the instruction message memory. An instruction message, which comprises a number of characters, is represented by a corresponding number of character codes which are stored in the receiver and which, when these measures are employed, can be arbitrarily changed so that, when displaying the particular message, they point to corresponding other locations in the character pattern memory, so that a message with a specific meaning can be displayed in a desired language.

A specific instruction message can comprise different numbers of characters, and thus different numbers of character codes, in different languages. In order to restrict the length of a report which contains such instruction messages, an associated code regarding the length of the message is transmitted with each instruction message during a transmission of this type. The instruction messages can accordingly, if appropriate, be stored with different lengths in the instruction message memory.

When manufacturing a receiver, an initialization set of instruction messages is preferably stored in a read-only portion of the instruction message memory, and when the receiver is taken into use, for example when switching on the power thereto, the initialization set is transferred from the read-only portion to a random access portion of the instruction message memory which, depending on the status of the receiver, is consulted for displaying an instruction message corresponding to the status and which can be wholly or partially replaced by a new set of instruction messages.

The invention also relates to a personal paging system which is suitable for application of the method according to the invention.

The invention is illustrated with reference to the drawings. In the drawings:

Fig. 1 shows schematically one embodiment of a personal paging system which is suitable for application of the invention;

Figures 2a, 2b and 2c show schematically examples of reports to be transmitted according to the invention in the system of Fig. 1;

Fig. 3 shows a table of character patterns which is valid for initialization of a receiver belonging to the system of Fig. 1;

Fig. 4 shows another table of character patterns; and

Fig. 5 shows a flow diagram to illustrate the method according to the invention.

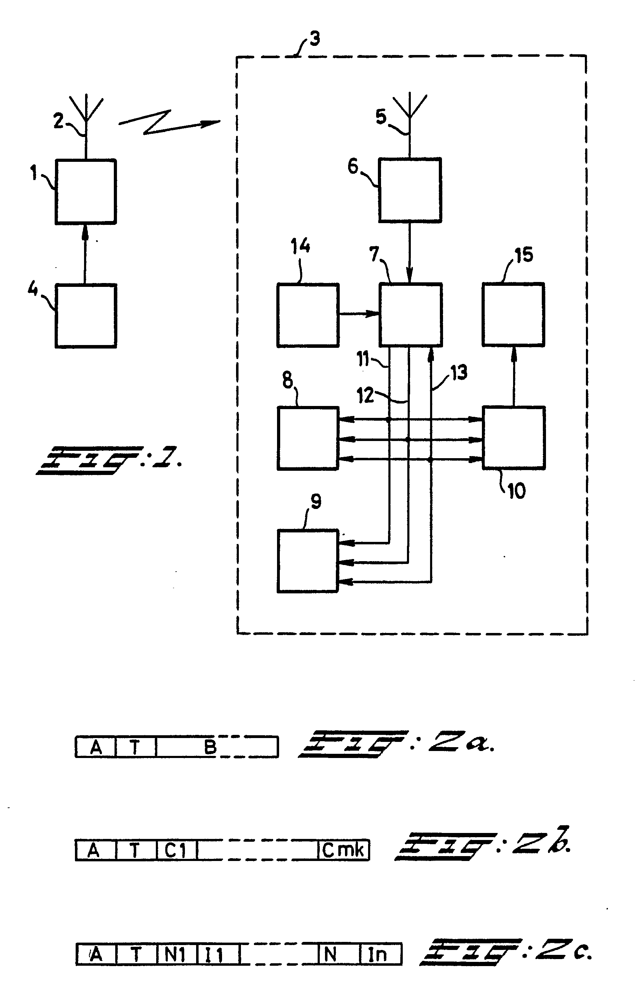

The personal paging system shown in Fig. 1 comprises a transmitter 1 with an aerial 2 and a number of portable receivers 3. The transmitter 1 is connected to report input means 4, which can comprise a computer and a telephone dialling system. The input means 4 are suitable for compiling a report which, after modulation by the transmitter, is transmitted by means of a transmission signal. Reports for programming a receiver 3 can, however, also be transferred to the receiver 3 by means of galvanic coupling means, which are not shown, between the transmitter 1 and the receiver 3.

The receiver 3 comprises an aerial 5 which is connected to an input of a receiver circuit 6 which separates the report from a received transmission signal and supplies the report in serial binary form to an input of a control circuit 7.

A read-only memory (ROM) 8, a random access memory (RAM) 9 and a display control circuit 10 are each connected to the control circuit 7 via a control bus 11, an address bus 12 and a data bus 13.

A number of setting elements, which are represented by the block with reference number 14, are connected to the control circuit 7 for selecting a specific operating mode of the receiver 3.

A display unit 15 is connected to the control circuit 10 for displaying therewith data stored in the receiver 3, which may or may not have been received with a report transmitted by means of the transmitter 1.

The ROM 8 is suitable for storing therein a control program for carrying out the various functions of the receiver 3.

A report destination code AX assigned to the receiver (X) 3 is stored in the ROM 8 or in the RAM 9.

The RAM 9 is also used for storing therein received "normal" messages, from which a selection can be made, for display thereof on the display unit 15, by means of the setting elements 14.

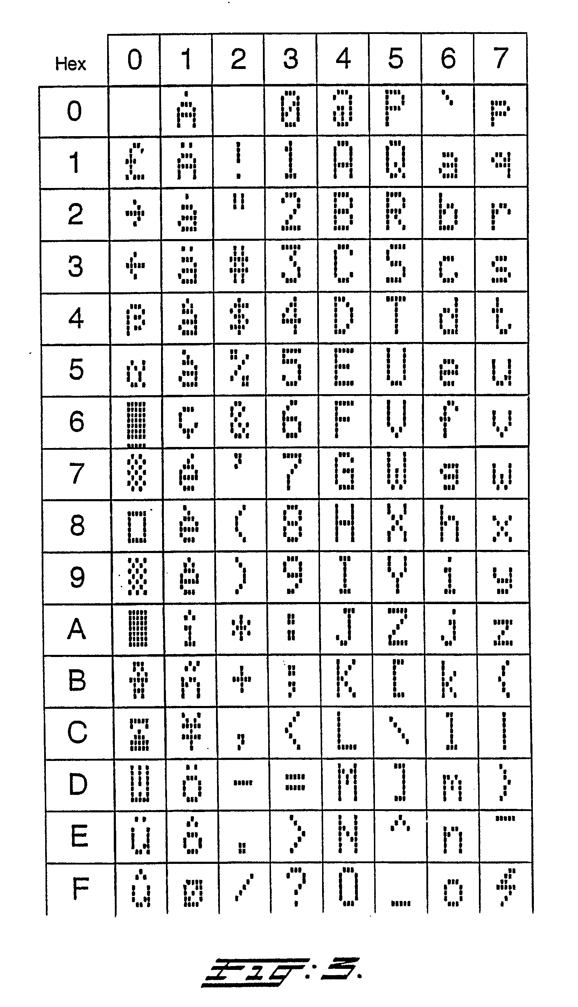

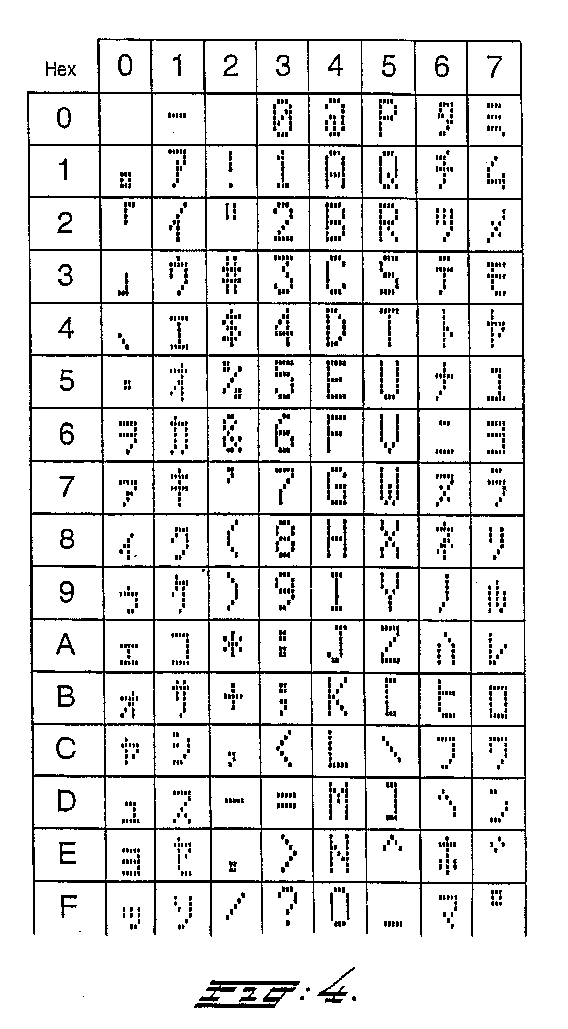

Preferably, the character pattern table shown in Fig. 3 is stored in the ROM 8. In the table of Fig. 3, the patterns are represented by a matrix of rectangular points. However, it is pointed out that, depending on the design of the display unit 15, the patterns can also be compiled in a different way, for example from a matrix containing more points or consisting of line segments. The table of Fig. 3 is termed an initialization or default table. The pattern codes for the various characters are stored in the ROM 8 in memory locations which correspond to character codes assigned to the various characters, for example 5A (hexadecimal) for the letter Z.

A table, TABLE 1, of groups of character codes, which groups represent respective instruction messages for the user when the characters corresponding to the codes are displayed, is preferably also in the ROM 8. The corresponding group of instruction messages is given in TABLE 2.

When the receiver 3 is taken into use, the character pattern table shown in Fig. 3 and TABLE 1 are read from the ROM 8 and stored in the RAM 9. The table stored in the RAM 9 is read, depending on the status of the receiver 3, by the control circuit 7, to display the relevant data.

According to the invention, it is possible wholly or partially to change the tables stored in the RAM 9.

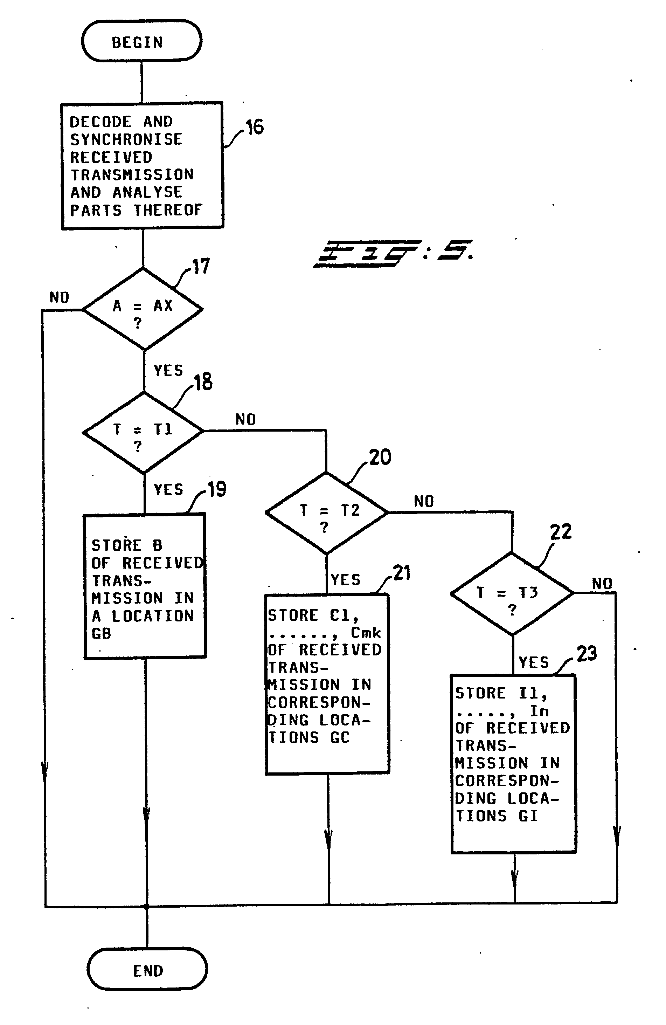

Fig. 4 shows an example of a character pattern table stored in the RAM 9 in which, compared with the table in Fig. 3, part of the table has been replaced by character patterns of the KANA alphabet. By this means, if the personal paging system is used in a region speaking a language using the KANA alphabet, messages can be transferred which comprise character codes which relate to the character codes of that part of the table of Fig. 4 containing the characters of the KANA alphabet.

If the pattern table of Fig. 4 is used, the default table, TABLE 1, of instruction messages which is transferred to the RAM 9 can be replaced by the groups of character codes of TABLE 3. By this means, users of the receiver 3 can read instructions or warnings in their own language on the display unit 15, via the operation of the receiver.

TABLE 1

| 1 | 44 45 4C 45 54 45 20 3F |
|---|---|
| 2 | 4D 4F 56 45 20 54 4F 20 4D 45 4D 4F 20 3F |
| 3 | 53 45 54 20 53 45 54 41 4E 44 42 59 20 3F |
| 4 | 42 4C 41 4E 20 53 45 45 54 41 4E 44 42 59 20 3F |
| 5 | 4C 4F 57 20 42 41 54 54 45 52 59 20 21 |
| 6 | 52 45 50 52 4F 47 20 52 45 43 20 21 |
| 7 | 4D 45 4D 4F 20 46 55 4C 4C 20 21 |
| 8 | 41 4C 45 52 54 20 3F |
| 9 | 4D 45 4D 4F 20 41 52 45 41 20 3F |
| 10 | 4D 41 49 4C 42 4F 58 45 53 20 3F |

TABLE 2

| 1 | DELETE ? |
|---|---|
| 2 | MOVE TO MEMO ? |
| 3 | SET STANDBY ? |
| 4 | BLANK STANDBY ? |
| 5 | LOW BATTERY ! |
| 6 | REPROG REC ! |
| 7 | MEMO FULL ! |
| 8 | ALERT OFF ? |
| 9 | MEMO AREA ? |
| 10 | MAILBOXES ? |

TABLE 3

| 1 | 1C 0E 13 17 0E 20 1C 6F 1D 16 |
| 2 | 72 73 20 66 20 6E 1F 7E 7D 20 1C 6F 1D 16 |
| 3 | 6B 0E 13 1C 7E 20 1C 6F 1D 16 |
| 4 | 6B 0E 13 1C 7E 20 65 1C 66 20 1C 6F 1D 16 |
| 5 | 63 7E 7D 61 20 76 09 78 0E 13 20 6C 1F 18 |
| 6 | 6C 7F 7B 18 7E 77 71 20 1C 63 18 70 7E 1B 12 |
| 7 | 72 73 20 76 09 78 0E 13 20 6F 7D 6A 7F 12 |
| 8 | 19 12 6E 09 20 16 12 1C 7E 0E |
| 9 | 72 73 20 14 78 11 |
| 10 | 72 12 79 20 6E 7E 0F 18 1D |

In order to be able to replace the tables stored in the RAM 9, the report input means 4 can compile 3 different types of report. These reports are shown schematically in Figures 2a, 2b and 2c. The compilation of the reports and the processing thereof will be explained with reference to Fig. 5. The following abbreviations are used in this explanation:

A = report destination code of a received report

AX = report destination code assigned to personal paging receiver X

T = report type code

T1, T2, T3 = values of T

B = "normal" message (T = T1)

C1, .., Cmk = series of m x k pattern codes of m characters (T = T2)

I1, .., In = series of n instruction messages (T = T3)

GB = memory location suitable for storage of a message B

GC = memory location suitable for storage of a pattern code C

GI = memory location suitable for storage of an instruction message I.

The reports shown in Fig. 2 comprise a report destination code A and a report type code T.

Depending on the type of information which is transferred by means of the report, the report also contains a "normal" message B, for which T = T1, a series of pattern codes C1, ..., Cm of m characters, for which T = T2, or a series of n instruction messages I1, ..., In accompanied by data regarding the lengths N1, ..., Nn thereof, for which T = T3.

Although not shown in Fig. 2, the reports can, as known per se, contain an actuating prefix, synchronization data and error control data.

On receipt of a report by a receiver 3, the report is decoded and synchronized and the parts thereof are split off, in block 16 of Fig. 5. Subsequently, in block 17, a check is made to determine whether the report destination code A is identical to a report destination code AX assigned to the receiver 3 and stored in the receiver 3. If the comparison was successful, the operation proceeds with block 18; otherwise, the end of the function is reached.

In block 18 a check is made to determine whether the report type code T of the received report is identical to the value T1. If the comparison was successful, the operation proceeds with block 19 and otherwise with block 20. In block 19 the information portion of the received report is stored as "normal" message B in a location GB of the RAM 9 which is intended for storage of such messages.

In block 20 a check is made to determine whether the report type code T of the received report is identical to the value T2. If the comparison was successful, the operation proceeds with block 21 and otherwise with block 22. In block 21 the information portion of the received report is regarded as a series of m x k pattern codes of m characters, k, in the example of the tables according to Figures 3 and 4, being the number of columns or rows of points of each character pattern. The received pattern codes are stored in locations GC for respective characters m in a portion of the RAM 9 intended for this purpose.

In block 22 a check is made to determine whether the report type code T is identical to the value T3. If the comparison was successful, the operation proceeds with block 23 and otherwise the end of the function is reached. In block 23 the information portion of the received report is regarded as a series of pairs of an instruction message Ii and a code Ni indicating the length of the message Ii, where i = 1, ... n. The received instruction messages consist of character codes which are stored in corresponding locations GI in a portion of the RAM 9 intended for this purpose.

It is pointed out that the method according to the invention can be physically implemented in many different ways and a receiver 3 may or may not comprise a microprocessor, and various components, such as the control circuit and the memories 8 and 9, can be formed on a single substrate.

**Claims**

1. Method for transmitting a message and for displaying a message after receipt, in a personal paging system, said method comprising the compilation of a report, which comprises a report destination code, assigned to a receiver of the system, and an information portion, which consists of a series of data and can represent a message, the transmission, by means of a transmitter, of a transmission signal comprising the report, the splitting, in the receiver, of the report from a transmission signal received by the receiver, the splitting from the report of component parts thereof, the comparison of a received report destination code with a report destination code previously assigned to the receiver and stored in the receiver, and, if the comparison was successful, the processing in the receiver of the information portion of the received report, the processing, on receipt of a message which is represented by the information portion and the data of which represent character codes, comprising the storage of the received message in a location of a message memory and the display of a stored message, a character display pattern associated with the corresponding character being read, from a location indicated by a corresponding character code, from a character pattern memory, and displayed, during the display of data, characterized in that, during the compilation of the report, a code to indicate the type of the information portion is added to the report, the types comprising one type for which the information portion contains character pattern codes, and in that, if the comparison was successful, a received character pattern code corresponding to a received type code is stored in a corresponding location of the character pattern memory.

2. Method according to Claim 1, characterized in that, during the compilation of a report with an information portion of the type containing character pattern codes, the character codes associated with the pattern codes are added to the information portion and in that a received pattern code is stored in a location in the character pattern memory indicated by a corresponding received character code.

3. Method according to Claim 1, characterized in that, during the compilation of a report with an information portion of the type containing character pattern codes, a fixed number of pattern codes of different characters, which are the same for different reports, are added in a fixed sequence to the information portion and the received pattern codes are stored in locations in the character pattern memory which correspond to the character codes of characters corresponding to the transmitted pattern codes.

4. Method according to Claim 1, characterized in that, on initialization of the receiver, a table of character pattern codes stored in a read-only memory is transferred to a random access portion of the character pattern memory and in that received character pattern codes are stored in corresponding locations in a reserved random access portion of the character pattern memory.

5. Method according to Claim 1, with which the receiver comprises an instruction message memory for the storage of instruction messages, which are displayed selectively depending on the status of the receiver, characterized in that the types comprise one type for which the information portion contains a number of instruction messages and in that, if the comparison was successful, a received instruction message corresponding to a received type code is stored in a corresponding location of the instruction message memory.

6. Method according to Claim 5, characterized in that, during the compilation of a report with an information portion of the type containing a number of instruction messages, a fixed number of instruction messages with a fixed sequence is added in a fixed sequence to the information portion and in that received instruction messages are stored in corresponding locations in the instruction message memory.

7. Method according to Claim 5, characterized in that, during the compilation of a report with an information portion of the type containing a number of instruction messages, a code relating to the length of the message is added to each instruction message and in that, on receipt of such a report, data from the messages are stored in accordance with the corresponding length codes in memory locations assigned to the respective messages.

8. Method according to Claim 5, characterized in that, on initialization of the receiver, a table of instruction messages stored in a read-only portion of the instruction message memory is transferred to a random access portion of the instruction message memory and in that received instruction messages are stored in corresponding locations of a reserved random access portion of the instruction message memory.

9. Personal paging system comprising a transmitter and at least one portable receiver, the transmitter being suitable for transmitting, by means of a transmission signal, a report which comprises a report destination code assigned to the receiver and an information portion which consists of a number of codes and can represent a message, and the receiver being provided with means for receiving the transmission signal and for splitting the report from the transmission signal and for splitting component parts thereof from the report, a memory element for pre-storage of a report destination code assigned to the receiver and, connected to a control circuit, a comparator for comparing a received report destination code with the stored report destination code, a memory for the storage of codes from a received information portion if the comparison was successful, adjusting elements, to be operated by a user of the receiver, for making a setting of the receiver, and a screen for the selective display, depending on a setting made, of stored data, which are represented by corresponding characters, corresponding character pattern codes of which are stored in a character pattern memory, characterized in that the transmitter has means for adding to a report to be transmitted a code which indicates the type of the information portion of the report, the types comprising one type for which the information portion contains character pattern codes, in that, if the comparison was successful, the control circuit determines the type of the information portion of a received report and in that the control circuit stores a received character pattern code, in accordance with the determined type, in a location in the character pattern memory which is indicated by the character code corresponding to the received pattern code.

10. System according to Claim 9, comprising a memory for the storage of instruction messages which, depending on the status of the receiver, are read by the control circuit and displayed on the screen, characterized in that the types comprise one type for which the information portion contains a number of information messages and in that, if the comparison was successful, the control circuit, on receipt of an instruction message, stores the message in a corresponding location in the instruction message memory.

FIG: 1.

FIG: 2a.

FIG: 2b.

FIG: 2c.

| Hex | 0 | 1 | 2 | 3 | 4 | 5 | 6 | 7 |
|---|---|---|---|---|---|---|---|---|
| 0 |  | Å |  | 0 | @ | P | ` | p |
| 1 | £ | Ä | ! | 1 | A | Q | a | q |
| 2 | ÷ | å | " | 2 | B | R | b | r |
| 3 | ← | ö | # | 3 | C | S | c | s |
| 4 |  | Ø | $ | 4 | D | T | d | t |
| 5 |  | ò | % | 5 | E | U | e | u |
| 6 |  | ç | & | 6 | F | V | f | v |
| 7 |  | é | ' | 7 | G | W | g | w |
| 8 |  | è | ( | 8 | H | X | h | x |
| 9 |  | ê | ) | 9 | I | Y | i | y |
| A |  | î | * | : | J | Z | j | z |
| B |  | ñ | + | ; | K | [ | k | { |
| C |  | ¥ | , | < | L | \ | l | \| |
| D |  | Ö | – | = | M | ] | m | } |
| E | Ü | ö | . | > | N | ^ | n | ‾ |
| F | à | æ | / | ? | O | _ | o | $ |

FIG. 3.

FIG. 4

FIG.5.

BEGIN

DECODE AND SYNCHRONISE RECEIVED TRANSMISSION AND ANALYSE PARTS THEREOF — 16

17
A = AX ?

NO

YES — 18
T = T1 ?

NO

YES — 19
STORE B OF RECEIVED TRANS- MISSION IN A LOCATION GB

20
T = T2 ?

NO

YES — 21
STORE C1, ......, Cmk OF RECEIVED TRANS- MISSION IN CORRESPON- DING LOCA- TIONS GC

22
T = T3 ?

NO

YES — 23
STORE I1, ......, In OF RECEIVED TRANS- MISSION IN CORRESPON- DING LOCA- TIONS GI

END

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2197103 (MOTOROLA INC.) <br> * the whole document * <br> --- | 1-10 | G08B5/22 <br> G08B3/10 |
| Y | WO-A-8805247 (MOTOROLA INC.) <br> * page 6, line 6 - page 7, line 17; claims * <br> --- | 1-10 | |
| A | GB-A-2206718 (CHINESE COMPUTERS LTD) <br> * the whole document * <br> ----- | 1-10 | |
| | | | **TECHNICAL FIELDS SEARCHED (Int. Cl.5 )** <br><br> G08B <br> H04Q |

The present search report has been drawn up for all claims

| Place of search | Date of completion of the search | Examiner |
|---|---|---|
| THE HAGUE | 11 JULY 1990 | REEKMANS M. V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)